# EUROPEAN PATENT SPECIFICATION

(11) **EP 2 933 402 B1**
(45) Date of publication and mention of the grant of the patent: **08.08.2018**
(21) Application number: 14305589.5
(22) Date of filing: 18.04.2014
(51) Int. Cl.: E05B 9/08, E05B 85/06, F16B 25/00, F16B 37/12

(54) **Assembly for maintaining a lock of a door of a motor vehicle**
Baugruppe zum Festhalten eines Schlosses einer Kraftfahrzeugtür
Ensemble pour maintenir un verrou d'une porte de véhicule automobile

(43) Date of publication of application: 21.10.2015
(73) Proprietor: U-Shin France, 94000 Créteil (FR)
(72) Inventor: Julien, Renaud, 94046 Creteil Cedex (FR)
(74) Representative: Gaillarde, Frédéric F. Ch.

(56) References cited:
- EP-A1- 0 549 094
- EP-A1- 2 685 113
- FR-A1- 2 238 082
- US-A- 5 885 042
- US-A- 5 987 942
- US-A1- 2004 033 122
- US-A1- 2011 302 969

## Description

### FIELD OF THE INVENTION

The invention relates to the field of lockset for motor vehicle.

### TECHNICAL BACKGROUND

Documents EP2685113 A1, US2011/302969 A1 and US5987942 describe examples of fastening devices according to the prior art.

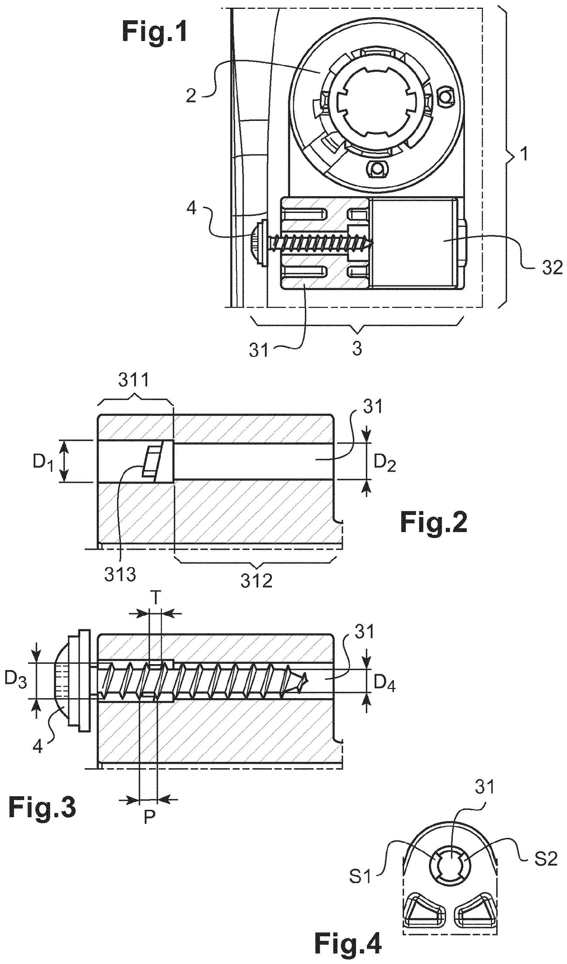

A lock for a door of a vehicle is intended to be inserted into the door of the vehicle. In order to insert said lock into the door, the lock is inserted into a holder. The holder comprises a clamp ring inside which the lock is intended to be inserted and a device for blocking the clamp ring on the door. Figure 1 presents an example of a holder 1 comprising a clamp ring 2 and a device 3 for blocking the clamp ring on the door. The device for blocking the clamp ring on the door comprises a housing 31 for the insertion of a fixing element 4. The device 3 comprises a body 32 able to cooperate with the clamp ring.

For the installation of the lock into the door of the vehicle, the lock is first inserted into the clamp ring, and then the lock is blocked into the clamp ring by a 90° turn of the lock into the clamp ring, said turn being performed by a fitter.

Once the lock is blocked into the clamp ring, the assembly lock comprising the lock and the clamp ring is maintained into the door by means of the fixing element, said fixing element being inserted into the housing 31 of the device 3, said fixing element being usually manually screwed by the fitter. Because of cost reduction issue, the housing is usually molded into a plastic element, and is thus not tapped. In this way, the fitter when screwing the fixing element into the housing has to tap and create the pitch. The type of fixing element usually used is self-tapping fixing elements. The operation of screwing performed by the fitter requires to applying a high force in order to tap correctly the housing and to maintain the fixing element in position inside the housing when blocking the clamp ring, and thus the lock, in the door of the motor vehicle.

### SUMMARY

It is an object of the invention to provide an assembly for facilitating a fast and precise screwing and thus blocking of a clamp ring for a lock in a door of a motor vehicle.

To this end, the invention provides an assembly for maintaining a lock of a door of a motor vehicle according to claim 1:

The presence of the guiding element projecting towards the interior of the housing, being located in the first part of the housing allows holding the fixing element in position in view of the screwing once inserted in the first part of the housing. Thus, the force to be applied by the fitter for the tapering and the insertion of the fixing element is lowered.

According to not limited embodiments, the method can comprise one or more of the following additional characteristics:
- the guiding element is positioned in the first part at a predefined distance from the second part ;
- the predefined distance is higher than a pitch of the thread ;
- the external thread of the fixing element is a helicoidal thread ;
- the guiding element is a ring with a helicoidal shape ;
- the guiding element is a ring having an inner hole threaded ;
- the guiding element has a maximal thickness inferior to a pitch of the thread ;
- an internal diameter of the ring is higher than a diameter of the body of the fixing element and below a diameter of the fixing element ;
- the guiding element comprises a plurality of sub-elements, the said sub-elements being distributed along a circumference of the housing ;
- the guiding element and the housing are made in a monobloc piece. The element is preferably molded with the housing which allows cost reductions, but is may also be a patch.

### DESCRIPTION OF THE DRAWINGS

Some embodiments of the device in accordance with embodiments of the present invention are now described, by way of example only, and with reference to the accompanying drawings, in which:
- figure 1 shows a schematic view of a holder for a lock of a door of a motor vehicle of the prior art ;
- figure 2 shows a housing of a device for blocking a clamp ring in a door of a motor vehicle according to an embodiment of the invention;
- figure 3 shows a fixing element inserted into the housing of figure 2;
- figure 4 shows a front view of a housing of a device for blocking a clamp ring in a door of a motor vehicle according to an embodiment of the invention ;
- figure 5 shows four steps (figure 5A to 5D) of the insertion of a fixing element into a housing of a device for blocking a clamp ring in a door of a motor vehicle according to an embodiment of the invention.

It is noted that like reference numerals represent similar parts throughout the several views of the drawings.

### DESCRIPTION OF EMBODIMENTS

Figure 2 shows a housing 31 of a device for blocking a clamp ring in a door of a motor vehicle. The housing comprises a first part 311 having a first diameter D1 and a second part 312 having a second diameter D2. The first diameter D1 is higher than the second diameter D2. When a fixing element is inserted into the housing, it first enters through the first part 311 and then continues its insertion through the second part 312 of the housing 31. The guiding element 313 is represented on figure 2. In this embodiment, the guiding element 313 is made up of a ring having a helicoidal shape. Indeed, the guiding element 313 is shaped to guide and prime the screwing of the fixing element into the housing, and its shape fits closely the shape of the helicoidal thread of the fixing element. In order to help the screwing of the fixing element into the housing, the thickness of the ring is inferior to the pitch of the thread of the fixing element. The guiding element 313 is positioned inside the first part 311 of the housing 31 at a predetermined distance of the second part 312. In this lack of space between the guiding element and the second part of the housing, a recess could be performed into the wall of the housing for helping the insertion of the fixing element and lowering the force to be applied for the screwing of the fixing element into the housing.

Figure 3 shows a fixing element 4 inserted into the housing 31 of figure 2. It is visible on figure 3 that the fixing element 313 is a ring with a thickness T inferior to the pitch P of the thread of the fixing element 4. The internal diameter of the said ring is below the diameter D3 of the fixing element. The diameter D3 of the fixing element is the overall diameter of the fixing element including both the diameter of the body D4 of the fixing element and the thread of the fixing element.

Figure 4 shows a front view of a housing 31, said housing comprising a guiding element, said guiding element comprising a first sub-element S1 and a second sub-element S2. The first sub-element S1 and the second sub-element S2 are distributed along the circumference of the housing. Indeed, they are radially opposed to each other and they both have a helicoidal shape. The first sub-element S1 and the second sub-element S2 may be pieces of a ring having a helicoidal shape like the one of figure 2 and 3.

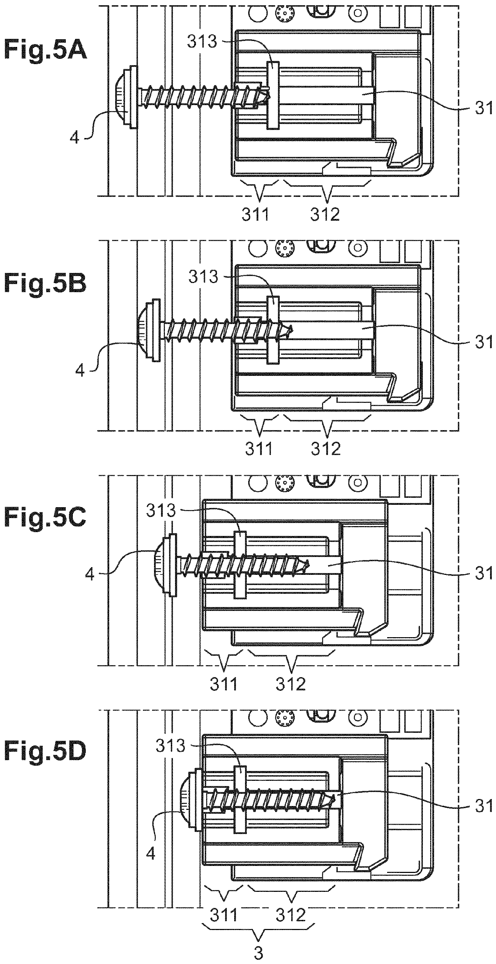

Figure 5 show four steps (figure 5A, 5B, 5C and 5D) of the insertion of a fixing element 4 into a housing 31 of a device for blocking a clamp ring in a door of a motor vehicle in order to block the clamp ring. The housing 31 has a first part 311 and a second part 312.

On figure 5A, the fixing element 4 is approaching the guiding element 313. The fixing element is guided through the first part having a diameter higher than the diameter of the thread of the fixing element. At this stage, represented on figure 5A, the rotation of the fixing element may be initiated, or the fixing element may be just inserted into the housing without rotation.

On figure 5B, the fixing element 4 passes through the guiding element 313. The thread of the fixing element is driven off by the guiding element 313, thus guiding and priming the screwing of the fixing element, until it enters in contact with the material forming the housing 31.

On figure 5C, the guiding element 313 has guided the fixing element into the housing, and thus the thread of the fixing element now taps the internal part of the housing 31.

On figure 5D, the fixing element is now in position into the housing and thus, the device 3 for blocking the clamp ring is blocked against the door.

## Claims

1. Assembly for maintaining a lock of a door of a motor vehicle, said assembly comprising:
- a clamp ring (2) intended to receive the lock ;
- a fixing element (4),
- a device for blocking said clamp ring (2) in the door of the motor vehicle, said device comprising a body (32) able to cooperate with the clamp ring (2) and defining a housing (31) for receiving the fixing element (4) with an external thread in order to allow the blocking of the clamp ring (2) in the door, wherein the housing (31) comprises :
- a first part (311) with a first diameter (D1) ;
- a second part (312) with a second diameter (D2) ;
the first diameter (D1) being higher than the second diameter (D2), the second diameter (D2) being shaped for being threaded by the external thread of the fixing element (4), said fixing element (4) being intended to be inserted in the housing (31) from the first part (311) to the second part (312), in order to fix the device to the door,
- a guiding element (313) being located inside the first part (311) of the housing (31) and
projecting towards the interior of the housing (31), said guiding element (313) enabling the guide of the fixing element (4) from the first part (311) to the second part (312), wherein the assembly is configured such that after the insertion of the fixing element (4) in the housing (31) of the device, the clamp ring (2) is fixed in the door of the motor vehicle.

2. Assembly according to claim 1, wherein the guiding element (313) is positioned in the first part (311) at a predefined distance from the second part (312).

3. Assembly according to claim 2, wherein the predefined distance is higher than a pitch (P) of the thread.

4. Assembly according to any one of the previous claims wherein the external thread of the fixing element (4) is a helicoidal thread.

5. Assembly according to any one of the previous claims, wherein the guiding element (313) is a ring with a helicoidal shape.

6. Assembly according to any one of claims 1 to 3, wherein the guiding element (313) is a ring having an inner hole threaded.

7. Assembly according to any one of the previous claims, wherein the guiding element (313) has a maximal thickness (T) inferior to a pitch (P) of the thread.

8. Assembly according to claims 5 or 6 and the previous claim, wherein an internal diameter of the ring is higher than a diameter (D4) of the body of the fixing element (4) and below the overall diameter (D3) of the fixing element (4).

9. Assembly according to any one of claims 1 to 3, wherein the guiding element (313) comprises a plurality of sub-elements (SI), the said sub-elements (S1) being distributed along a circumference of the housing (31).

10. Assembly according to any one of the previous claims, wherein the guiding (313) and the housing (31) are made in a monobloc piece.

## Patentansprüche

1. Anordnung zum Festhalten eines Schlosses einer Tür eines Motorfahrzeugs, wobei die Anordnung umfasst:
- einen Klemmring (2), der dazu bestimmt ist, das Schloss aufzunehmen;
- ein Fixierungselement (4),
- eine Vorrichtung zum Blockieren des Klemmrings (2) in der Tür des Motorfahrzeugs, wobei die Vorrichtung einen Korpus (32) umfasst, der imstande ist, mit dem Klemmring (2) zusammenzuwirken, und der ein Gehäuse (31) zur Aufnahme des Fixierungselements (4) mit einem Außengewinde definiert, um die Blockierung des Klemmrings (2) in der Tür zu ermöglichen, wobei das Gehäuse (31) umfasst:
- einen ersten Teil (311) mit einem ersten Durchmesser (D1);
- einen zweiten Teil (312) mit einem zweiten Durchmesser (D2);
wobei der erste Durchmesser (D1) größer ist als der zweite Durchmesser (D2), wobei der zweite Durchmesser (D2) geformt ist, um durch das Außengewinde des Fixierungselements (4) mit einem Gewinde versehen zu werden, wobei das Fixierungselement (4) bestimmt ist, von dem ersten Teil (311) in den zweiten Teil (312) in das Gehäuse (31) eingeführt zu werden, um die Vorrichtung an der Tür zu fixieren,
- ein Führungselement (313), das sich innerhalb des ersten Teils (311) des Gehäuses (31) befindet, und in Richtung der Innenseite des Gehäuses (31) vorsteht, wobei das Führungselement (313) die Führung des Fixierungselements (4) von dem ersten Teil (311) zum zweiten Teil (312) ermöglicht,
wobei die Anordnung so konfiguriert ist, dass der Klemmring (2) nach dem Einführen des Fixierungselements (4) in das Gehäuse (31) der Vorrichtung in der Tür des Motorfahrzeugs fixiert ist.

2. Anordnung nach Anspruch 1, wobei das Führungselement (313) in dem ersten Teil (311) in einem vorbestimmten Abstand von dem zweiten Teil (312) positioniert ist.

3. Anordnung nach Anspruch 2, wobei der vorbestimmte Abstand größer als eine Steigung (P) des Gewindes ist.

4. Anordnung nach einem der vorstehenden Ansprüche, wobei das Außengewinde des Fixierungselements (4) ein schraubenförmiges Gewinde ist.

5. Anordnung nach einem der vorstehenden Ansprüche, wobei das Führungselement (313) ein Ring mit einer schraubenförmigen Form ist.

6. Anordnung nach einem der Ansprüche 1 bis 3, wobei das Führungselement (313) ein Ring ist, der eine Innenbohrung mit Gewinde aufweist.

7. Anordnung nach einem der vorstehenden Ansprüche, wobei das Führungselement (313) eine maximale Dicke (T) aufweist, die geringer als eine Steigung (P) des Gewindes ist.

8. Anordnung nach den Ansprüchen 5 oder 6 und dem vorstehenden Anspruch, wobei ein Innendurchmesser des Rings größer ist als ein Durchmesser (D4) des Korpus des Fixierungselements (4) und kleiner als der Gesamtdurchmesser (D3) des Fixierungselements (4).

9. Anordnung nach einem der Ansprüche 1 bis 3, wobei das Führungselement (313) eine Vielzahl von Sub-Elementen (S1) umfasst, wobei die Sub-Elemente (S1) entlang eines Umfangs des Gehäuses (31) verteilt sind.

10. Anordnung nach einem der vorstehenden Ansprüche, wobei das Führungselement (313) und das Gehäuse (31) aus einem Einblockstück gefertigt sind.

## Revendications

1. Ensemble de maintien d'un verrou d'une porte d'un véhicule automobile, ledit ensemble comprenant :
- une bague de serrage (2) destinée à recevoir le verrou ;
- un élément de fixation (4),
- un dispositif de blocage de ladite bague de serrage (2) dans la porte du véhicule automobile, ledit dispositif comprenant un corps (32) apte à coopérer avec la bague de serrage (2) et définissant un logement (31) pour recevoir l'élément de fixation (4) avec un filetage externe afin de permettre le blocage de la bague de serrage (2) dans la porte, où le logement (31) comprend :
- une première partie (311) ayant un premier diamètre (D1) ;
- une deuxième partie (312) ayant un deuxième diamètre (D2) ;
le premier diamètre (D1) étant supérieur au deuxième diamètre (D2), le deuxième diamètre (D2) étant formé pour être fileté par le filetage externe de l'élément de fixation (4), ledit élément de fixation (4) étant destiné à être inséré dans le logement (31) depuis la première partie (311) jusqu'à la deuxième partie (312), afin de fixer le dispositif à la porte,
- un élément de guidage (313) étant situé à l'intérieur de la première partie (311) du logement (31) et faisant saillie vers l'intérieur du logement (31), ledit élément de guidage (313) permettant le guidage de l'élément de fixation (4) depuis la première partie (311) jusqu'à la deuxième partie (312),
dans lequel l'ensemble est configuré de sorte qu'après l'insertion de l'élément de fixation (4) dans le logement (31) du dispositif, la bague de serrage (2) soit fixée dans la porte du véhicule automobile.

2. Ensemble selon la revendication 1, dans lequel l'élément de guidage (313) est positionné dans la première partie (311) à une distance prédéfinie de la deuxième partie (312).

3. Ensemble selon la revendication 2, dans lequel la distance prédéfinie est supérieure à un pas (P) du filetage.

4. Ensemble selon l'une quelconque des revendications précédentes dans lequel le filetage externe de l'élément de fixation (4) est un filetage hélicoïdal.

5. Ensemble selon l'une quelconque des revendications précédentes, dans lequel l'élément de guidage (313) est une bague ayant une forme hélicoïdale.

6. Ensemble selon l'une quelconque des revendications 1 à 3, dans lequel l'élément de guidage (313) est une bague ayant un trou intérieur fileté.

7. Ensemble selon l'une quelconque des revendications précédentes, dans lequel l'élément de guidage (313) a une épaisseur maximale (T) inférieure à un pas (P) du filetage.

8. Ensemble selon les revendications 5 ou 6 et la revendication précédente, dans lequel un diamètre interne de la bague est supérieur à un diamètre (D4) du corps de l'élément de fixation (4) et inférieur au diamètre global (D3) de l'élément de fixation (4).

9. Ensemble selon l'une quelconque des revendications 1 à 3, dans lequel l'élément de guidage (313) comprend une pluralité de sous-éléments (S1), lesdits sous-éléments (S1) étant répartis sur une circonférence du logement (31).

10. Ensemble selon l'une quelconque des revendications précédentes, dans lequel l'élément de guidage (313) et le logement (31) sont réalisés en une pièce monobloc.
